Europäisches Patentamt

European Patent Office

Office européen des brevets

(19)

(11) Numéro de publication : **0 140 765**
**B1**

(12) FASCICULE DE BREVET EUROPÉEN

(45) Date de publication du fascicule du brevet :
30.07.86

(51) Int. Cl.⁴ : **B 62 D 33/06**

(21) Numéro de dépôt : 84401980.2

(22) Date de dépôt : 04.10.84

(54) Installation de couchage pour cabines de conduite de véhicules routiers.

(30) Priorité : 04.10.83 FR 8315771

(43) Date de publication de la demande :
08.05.85 Bulletin 85/19

(45) Mention de la délivrance du brevet :
30.07.86 Bulletin 86/31

(84) Etats contractants désignés :
AT BE CH DE GB IT LI NL SE

(56) Documents cités :
DE-A- 2 348 264
FR-A- 1 439 775
FR-A- 1 584 361
FR-A- 2 348 843
FR-A- 2 464 874
FR-A- 2 473 000

(73) Titulaire : RENAULT VEHICULES INDUSTRIELS
Société Anonyme dite:
129 rue Servient "La Part Dieu"
F-69003 Lyon (FR)

(72) Inventeur : Chassaing, Claude
33, avenue des Etats-Unis
F-78000 Versailles (FR)
Inventeur : Collart, Jean-Claude
6, rue Nicolas Nicquet
F-78220 Viroflay (FR)
Inventeur : Lubert, Yves
3, allée des Faons
F-78170 La Celle Saint Cloud (FR)

(74) Mandataire : Ernst-Schonberg, Michel
RNUR - S. 0804 B.P. 103
F-92109 Boulogne-Billancourt (FR)

## Description

L'invention concerne une installation de couchage pour cabines de conduite de véhicules routiers comportant deux couchettes superposées montées derrière le siège du conducteur et le siège du convoyeur, respectivement accolées à la paroi arrière de limitation de la cabine et disposées entre les parois latérales de celle-ci, et dans laquelle la couchette supérieure est fixée de manière articulée à la cabine par l'un de ses côtés longitudinaux et est soutenue par son autre côté longitudinal d'une part dans la position de couchage et d'autre part dans une position dans laquelle ladite couchette supérieure sert d'élément de siège à la couchette inférieure lorsque cette dernière est utilisée comme surface d'assise pour un siège supplémentaire.

Le problème non résolu sur un tel siège décrit par exemple dans le brevet FR-A-1 584 361 est qu'il ne permet pas de s'asseoir commodément à cause de son faible espacement de la rangée des sièges du conducteur et du convoyeur.

Lors des haltes sur les aires de repos en bordure de route, il n'est pas rare que le conducteur soit amené à s'asseoir sur un tel siège pour manger ou pour prendre un peu de repos.

L'invention a donc pour but de fournir une installation de couchage pour cabines de conduite dans laquelle la couchette inférieure peut jouer aussi bien le rôle d'un siège que celui d'une couchette.

Selon l'invention, ce problème est résolu par le fait que la couchette supérieure possède d'une part, le long de son côté longitudinal opposé à celui portant l'articulation, un bourrelet et d'autre part un axe longitudinal médian de pliage permettant le rapprochement des côtés longitudinaux de cette couchette vers sa position de rangement dans laquelle le bourrelet constitue un appui-tête qui prolonge vers le haut un côté longitudinal relevable de la couchette inférieure, lorsque l'autre côté longitudinal de cette dernière couchette limite vers l'avant la surface d'assise du siège supplémentaire.

Une cabine de conduite ainsi installée peut donc offrir un emplacement à des passagers supplémentaires éventuels. La disposition de la couchette supérieure joue ici un rôle intéressant dans le sens que les deux portions de la couchette pliée délimitent un emplacement de rangement du couchage et d'objets et produits divers sans nécessité d'arrimage dans la cabine. Il s'ensuit que la mise en place du couchage correspondant à la couchette supérieure est aussi beaucoup plus rapide que dans les installations présentement connues.

L'invention est expliquée plus précisément ci-après, avec d'autres détails, en référence aux dessins annexés sur lesquels :

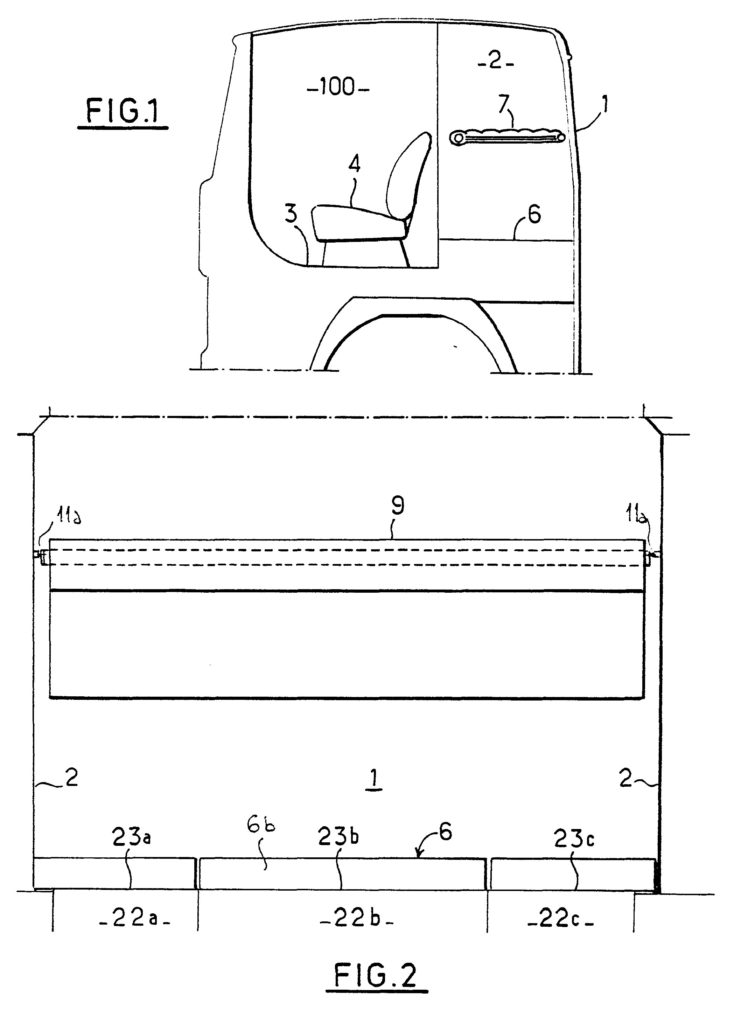

la figure 1 est une élévation latérale d'une cabine de conduite dont on a enlevé le côté latéral dans le but de montrer l'installation de couchage en position d'utilisation ;

la figure 2 représente une coupe transversale de la cabine représentée à la figure 1 ;

la figure 3 représente une coupe médiane de l'installation de couchage ;

la figure 4 représente une vue en coupe médiane du siège supplémentaire réalisé à partir de l'ensemble des couchettes ;

la figure 5 est une vue en perspective de l'installation de couchage en position non utilisée dans laquelle une partie du siège supplémentaire est soulevée pour accéder notamment à un réservoir d'eau.

Les dessins montrent l'intérieur d'une cabine de conduite 100 de véhicule routier, limitée notamment par une paroi arrière 1, des parois latérales 2 et le plancher 3. Le plancher supporte une rangée de sièges constituée par exemple par le siège 4 du conducteur et par le siège 5 du convoyeur. Une installation de couchage selon l'invention se trouve dans l'espace compris entre la paroi arrière 1 et la rangée de sièges précitée. L'installation de couchage est constituée par une couchette inférieure 6 et par une couchette supérieure 7 respectivement accolées à la paroi arrière 1 et disposées entre les deux parois latérales 2.

La couchette supérieure 7 comprend deux côtés longitudinaux 8a, 8b dont l'un 8a est accolé à la paroi arrière 1 et dont l'autre 8b porte un bourrelet 9.

A proximité du côté 8a, s'étend longitudinalement un axe 10a intégré à la couchette et engagé dans deux paliers d'articulation-support 11a respectivement fixés aux parois latérales 2.

Le côté longitudinal 8b portant le bourrelet 9 est traversé longitudinalement par un axe 10b dont les extrémités portent respectivement un bras de tension 12 dont l'extrémité libre est montée à articulation autour d'un axe 13 fixé en position sur la paroi 2.

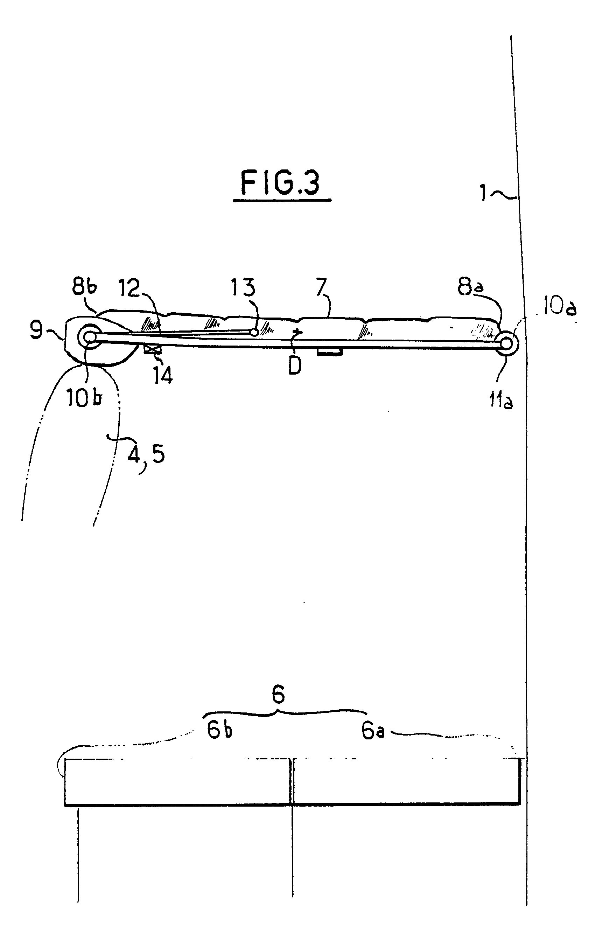

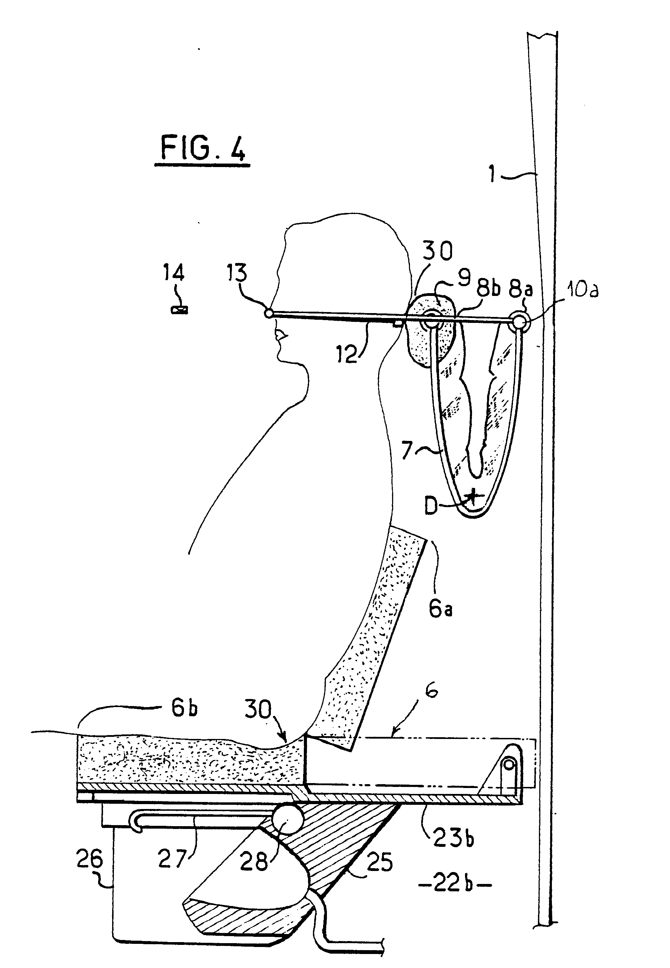

Le bras de tension 12 est monté plus particulièrement à articulation autour de l'axe 13 entre une première position horizontale représentée à la figure 3 dans laquelle la couchette 7 est en position d'utilisation et dans laquelle chacun des bras de tension est en appui sur un dispositif 14 auquel peut être adjoint un verrou. Il est à remarquer que le dispositif 14 peut être de tout type connu et pourra être réalisé par exemple sous la forme d'un crochet porté par le bras 12 engageable dans un œillet formant butée porté par la paroi 2. La deuxième position horizontale des bras de tension 12 est représentée à la figure 4 dans laquelle la couchette 7 occupe la position de rangement pliée autour d'un axe longitudinal médian D et dans laquelle les côtés longitudinaux 8a, 8b sont rapprochés. Le bourrelet 9 constitue dans cette position l'appui-tête du siège supplémentaire 30 dont le dossier est limité en haut par le côté longitudinal relevé 6a, tandis que l'autre côté longitudinal 6b limite vers l'avant la surface d'assise de ce siège supplémentaire.

Dans le but de parfaire la sécurité de position de couchage de la couchette supérieure 7 contre une éventuelle rupture du dispositif 14, le bourrelet 9 repose sur les sièges 4, 5 du conducteur et du convoyeur.

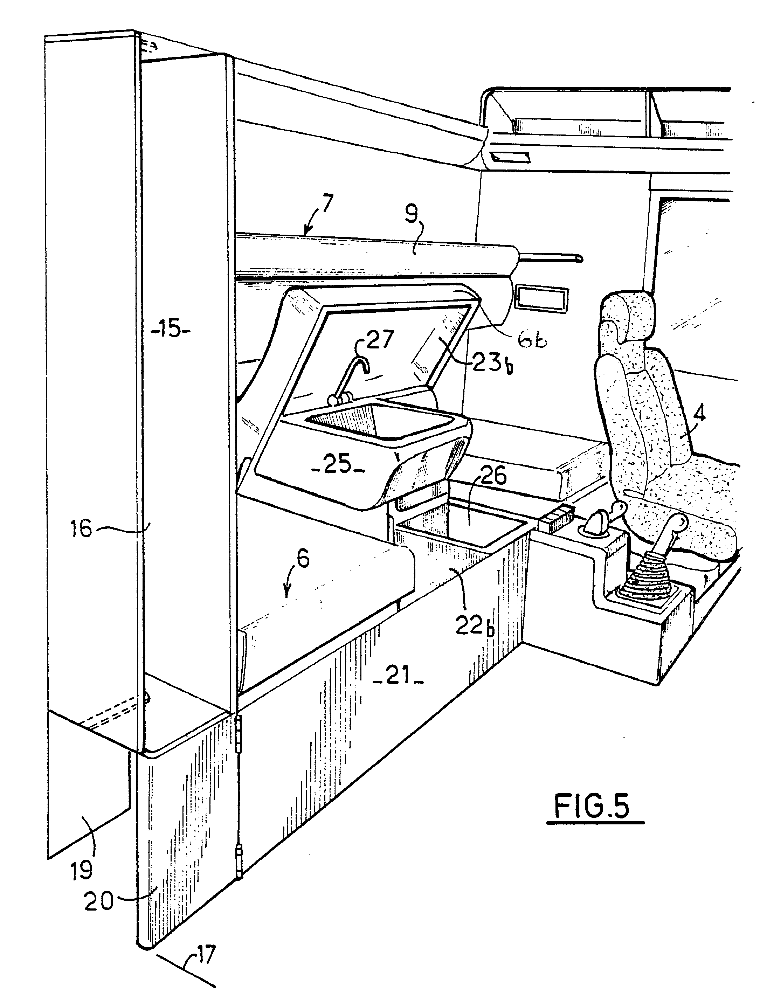

L'installation de couchage est complétée ainsi que cela est représenté à la figure 5 par des modules d'armoire de rangement 15 dont la porte verticale 16 est montée à rotation autour d'un axe positionné de la sorte que ladite porte 16 en position fermée soit en prolongation transversale du seuil d'accès 17 à la cabine et à proximité des bords antérieurs des couchettes 6, 7. Le module d'armoire de rangement 15 est limité latéralement par la paroi extérieure de la cabine et la paroi latérale 2. Il est complété par un placard à chaussures indépendant 19 muni d'un portillon 20. L'agencement du module d'armoire 15 permet la manipulation aisée de son contenu ainsi que celle de la porte 16 à partir de couchettes 6, 7.

La couchette inférieure 6 repose sur un socle creux 21 à compartiments 22a, 22b, 22c fermés par des couvercles indépendants 23a, 23b, 23c sur lesquels repose le matelas de la couchette 6. Le compartiment 22b est obturé par le couvercle 23b qui supporte l'assise du siège supplémentaire 30.

Le compartiment 22b constitue le logement d'un évier 25 et d'un réfrigérateur 26. L'évier 25, mieux représenté aux figures 4, 5, est contigu au couvercle 23b dont la face inférieure constitue l'organe de commande de déplacement du bec verseur pivotant 27.

Au bec verseur 27, qui peut occuper une position érigée sous l'action d'un ressort représentée à la figure 5 et une position déviée à l'horizontale représentée à la figure 4, est associé un robinet 28 dont la commande d'ouverture et de fermeture correspond à la position du bec verseur 27. En particulier, le robinet 28 peut être ouvert lorsque le bec est érigé et il est fermé lorsque la position dudit bec est déviée à l'horizontale par suite de la fermeture du couvercle 23b. Dans cette position, l'évier 25 occupe une position basculée et de vidange.

## Revendications

1. Installation de couchage pour cabines de conduite de véhicules routiers comportant deux couchettes (6, 7) superposées montées derrière le siège (4) du conducteur et le siège (5) du convoyeur, respectivement accolées à la paroi arrière (1) de limitation de la cabine et disposées entre les parois latérales (2) de celle-ci et dans laquelle la couchette supérieure (7) est fixée de manière articulée à la cabine par l'un (8a) de ses côtés longitudinaux (8a, 8b) et est soutenue par son autre côté longitudinal (8b) d'une part dans la position de couchage et d'autre part dans une position dans laquelle la couchette supérieure (7) sert d'élément de siège à la couchette inférieure (6) lorsque cette dernière est utilisée comme surface d'assise pour un siège supplémentaire (30), caractérisée par le fait que la couchette supérieure (7) possède, d'une part le long de son côté longitudinal (8b) opposé à celui (8a) portant l'articulation, un bourrelet (9) et d'autre part un axe longitudinal médian de pliage (D) permettant le rapprochement des côtés longitudinaux (8a, 8b) de cette couchette (7) vers sa position de rangement dans laquelle le bourrelet (9) constitue un appui-tête qui prolonge vers le haut un côté longitudinal (6a) relevable de la couchette inférieure (6) lorsque l'autre côté longitudinal (6b) de cette dernière couchette (6) limite vers l'avant la surface d'assise du siège supplémentaire (30).

2. Installation selon la revendication 1, caractérisée par le fait que chaque extrémité de la couchette supérieure (7) suivant le bord longitudinal du bourrelet (9) porte un bras de tension (12) monté par l'une de ses extrémités à articulation sur un élément d'armature (10b) du bourrelet (9) et par son autre extrémité à articulation autour d'un axe (13), porté par la paroi latérale (2) de la cabine.

3. Installation selon la revendication 2, caractérisée par le fait que le bras de tension (12) de la couchette supérieure coopère avec un dispositif d'appui et/ou de verrouillage (14) fixé à la paroi latérale de la cabine.

4. Installation selon l'une quelconque des revendications 1 à 3, caractérisée par le fait que le bourrelet (9) de la couchette supérieure (7), en position d'utilisation de cette dernière, est en appui sur le siège du conducteur et/ou du convoyeur.

5. Installation selon la revendication 2 ou 3, caractérisée par le fait que la paroi latérale de la cabine constitue la face extérieure d'un module d'armoire de rangement (15) dont la porte verticale (16) est en prolongement transversal du seuil d'accès (17) à la cabine, à proximité des bords antérieurs des couchettes.

6. Installation selon l'une quelconque des revendications 1 à 5, caractérisée par le fait que la couchette inférieure (6) repose sur un socle creux à compartiments (22a, 22b, 22c) à couvercles (23a, 23b, 23c) dont l'un (22b) constitue le support de l'assise du siège supplémentaire (30).

7. Installation selon la revendication 6, caractérisée par le fait que la face inférieure du couvercle (23b) supportant la surface d'assise du siège supplémentaire (30) constitue l'organe de commande de déplacement d'un bec verseur pivotant (27) de remplissage d'un évier (25).

8. Installation selon la revendication 7, caractérisée par le fait que le bec verseur (27) est associé à un robinet (28) commandé sous la dépendance de la position de pivotement du bec verseur (27) adjoint à l'évier, de telle sorte que si le bec verseur est érigé, le robinet peut être ouvert, tandis qu'il est fermé lorsque la position érigée du bec verseur est déviée à l'horizontale par suite de la fermeture du couvercle (23b) correspondant du compartiment (22b) contenant l'évier (25), et du basculement dudit évier vers une position de vidange.

## Claims

1. A sleeping installation for driving cabins of road vehicles comprising two superposed bunks (6, 7) which are mounted behind the seat (4) for the driver and the seat (5) for the driver's mate and which are respectively coupled to the rear wall (1) defining the cabin and which are disposed between the side walls (2) thereof, and in which the upper bunk (7) is pivotally fixed to the cabin by one (8a) of its longitudinal sides (8a, 8b) and is supported by its other longitudinal side (8b) on the one hand in the sleeping position and on the other hand in a position in which the upper bunk (7) serves as a seat element for the lower bunk (6) when the latter is used as a seat surface for an additional seat (30), characterised in that the upper bunk (7) has, on the one hand along its longitudinal side (8b) opposite to the side (8a) bearing the pivot mounting, a cushion (9) and, on the other hand, a central longitudinal axis (D) of folding movement permitting the longitudinal sides (8a, 8b) of said bunk (7) to be brought towards each other, towards the storage position of the bunk in which the cushion (9) forms a head rest which extends upwardly a raisable longitudinal side (6a) of the lower bunk (6) when the other longitudinal side (6b) of said latter bunk (6) delimits in a forward direction the seat surface of the additional seat (30).

2. An installation according to claim 1 characterised in that each end of the upper bunk (7) along the longitudinal edge of the cushion (9) carries a tensioning arm (12) which is mounted by means of one of its ends pivotally on a frame element (10b) of the cushion (9) and by means of its other end pivotally about an axis (13) carried by the side wall (2) of the cabin.

3. An installation according to claim 2 characterised in that the tensioning arm (12) of the upper bunk co-operates with a support and/or locking device (14) fixed to the side wall of the cabin.

4. An installation according to any one of claims 1 to 3 characterised in that the cushion (9) of the upper bunk (7), in the position of use of the latter, is supported on the seat for the driver and/or the driver's mate.

5. An installation according to claim 2 or claim 3 characterised in that the side wall of the cabin forms the outside face of a storage cupboard unit (15) whose vertical door (16) is disposed in transverse alignment with the sill (17) of the access opening to the cabin, in the vicinity of the front edges of the bunks.

6. An installation according to any one of claims 1 to 5 characterised in that the lower bunk (6) rests on a hollow base having compartments (22a, 22b, 22c) having lids (23a, 23b, 23c), one thereof (22b) forming the support for the seat portion of the additional seat (30).

7. An installation according to claim 6 characterised in that the lower face of the lid (23b) for supporting the seat surface of the additional seat (30) forms the member for controlling the movement of a pivotal spout (27) for filling a basin (25).

8. An installation according to claim 7 characterised in that the spout (27) is associated with a tap (28) controlled in dependence on the pivotal position of the spout (27) associated with the basin, in such a way that if the spout is erected, the tap can be opened while it is closed when the erected position of the spout is deflected into the horizontal as a result of closure of the corresponding lid (23b) of the compartment (22b) containing the basin (25), and tipping movement of the basin towards an emptying position.

## Patentansprüche

1. Liegeeinrichtung in Fahrzeugkabinen von Straßenfahrzeugen mit zwei Schlafkojen (6, 7), die übereinander hinter dem Sitz (4) des Fahrers und dem Sitz (5) des Beifahrers angeordnet sind und an der rückwärtigen Begrenzungswand (1) der Kabine bzw. zwischen den Seitenwänden (2) der Kabine angehängt sind, wobei die obere Schlafkoje (7) entlang einer (8a) ihrer Längsseiten (8a, 8b) an der Kabine angelenkt ist und an ihrer anderen Längsseite (8b) einerseits in der Schlafstellung unterstützt wird und andererseits in einer Stellung, in der die obere Schlafkoje (7) als Stützteil für die untere Schlafkoje (6) dient, wenn letztere als Sitzfläche für einen zusätzlichen Sitz (30) dient, dadurch gekennzeichnet, daß die obere Schlafkoje (7) einerseits entlang ihrer Längsseite (8b), die derjenigen (8a) mit dem Gelenk entgegengesetzt ist, eine Wulst (9) aufweist, und andererseits eine mittlere Faltachse (D) in Längsrichtung, die das Annähern der Längsseiten (8a, 8b) dieser Schlafkoje (7) in ihrer Aufräumstellung ermöglicht, in der die Wulst (9) eine Kopfstütze darstellt, welche eine aufklappbare Längsseite (6a) der unteren Schlafkoje (6) nach oben verlängert, wenn die andere Längsseite (6b) der letzteren Schlafkoje (6) die Sitzfläche des Zusatzsitzes (30) nach vorne begrenzt.

2. Einrichtung nach Anspruch 1, dadurch gekennzeichnet, daß jedes Ende der oberen Schlafkoje 7 entlang des Längsrandes der Wulst (9) einen Spannarm (12) trägt, dessen eines Ende an einem Beschlagteil (10b) der Wulst (9) angelenkt ist und dessen anderes Ende an einer Achse (13) angelenkt ist, die von der Seitenwand (2) der Kabine getragen wird.

3. Einrichtung nach Anspruch 2, dadurch gekennzeichnet, daß der Spannarm (12) der oberen Schlafkoje mit einer Stütz- und/oder Verriegelungsanordnung (14) zusammenwirkt, die an der Seitenwand der Kabine befestigt ist.

4. Einrichtung nach einem der Ansprüche 1 bis 3, dadurch gekennzeichnet, daß die Wulst (9) der oberen Schlafkoje (7) in ihrer Benutzungstellung sich auf dem Sitz des Fahrers und/oder des Beifahrers abstützt.

5. Einrichtung nach Ansprüchen 2 oder 3, dadurch gekennzeichnet, daß die Seitenwand der Kabine die Außenfläche eines Einbauschrankes (15) bildet, dessen senkrechte Tür (16) die Querverlängerung der Zugangsstufe (17) zur Kabine bildet in der Nähe der vorderen Ränder der Schlafkojen.

6. Einrichtung nach einem der Ansprüche 1 bis 5, dadurch gekennzeichnet, daß die untere Schlafkoje (6) auf einem Hohlsockel ruht, der Abteile (22a, 22b, 22c) mit Deckeln (23a, 23b, 23c) aufweist, von denen einer (22b) die Stützfläche für den Zusatzsitz (30) bildet.

7. Einrichtung nach Anspruch 6, dadurch gekennzeichnet, daß die untere Fläche des Deckels (23b), die die des Zusatzsitzes (30) trägt, das Steuerorgan für das Verschieben eines schwenkbaren Füllrohrs (27) zum Füllen eines Waschbeckens (25) darstellt.

8. Einrichtung nach Anspruch 7, dadurch gekennzeichnet, daß das Füllrohr (27) mit einem Hahn (28) verbunden ist, der in Abhängigkeit von der Schwenkstellung des dem Waschbecken zugeordneten Füllrohrs (27) steuerbar ist, derart, daß, wenn das Füllrohr aufgerichtet ist, der Wasserhahn geöffnet werden kann, während er geschlossen ist, wenn das Füllrohr infolge des Schließens des Deckels (23b) des zugehörigen Abteils (22b) mit dem Waschbecken (25) bis zur Waagrechten verschwenkt ist, sowie während eines Verschwenkens des Waschbeckens bis in eine Entleerungsstellung.

FIG.1

-2-

-100-

7

1

4

3

6

FIG.2

11a

9

11a

2

1

2

23a

6b

23b

6

23c

-22a-

-22b-

-22c-

1

# FIG.3

# FIG. 4

FIG.5